# EUROPEAN PATENT SPECIFICATION

(11) **EP 4 147 287 B1**
(45) Date of publication and mention of the grant of the patent: **29.10.2025**
(21) Application number: 21817007.4
(22) Date of filing: 28.05.2021
(51) Int. Cl.: H01M 8/0258, H01M 8/04007, H01M 8/0612, C25B 1/04, C25B 9/60, C25B 15/08

(54) **SYSTEMS AND METHODS FOR MAGNETIC BUOYANCY ENHANCED ELECTROLYSIS AND BOILING SYSTEMS**
SYSTEME UND VERFAHREN FÜR DURCH MAGNETISCHEN AUFTRIEB VERSTÄRKTE ELEKTROLYSE- UND SIEDESYSTEME
SYSTÈMES ET PROCÉDÉS POUR DES SYSTÈMES D'ÉLECTROLYSE ET D'ÉBULLITION AMÉLIORÉS À FLOTTABILITÉ MAGNÉTIQUE

(30) Priority: 02.06.2020 US 202063033527 P
(43) Date of publication of application: 15.03.2023
(73) Proprietor: The Regents of the University of Colorado, a body corporate, Denver, CO 80203 (US)
(72) Inventor: CALVO, Alvaro Romero, 18005 Granada (ES); SCHAUB, Hanspeter, Golden, Colorado 80403 (US)
(74) Representative: Hepworth Browne
(86) International application number: PCT/US2021/034697
(87) International publication number: WO 2021/247385

(56) References cited:
- US-A1- 2004 195 089
- US-A1- 2012 222 954
- US-A1- 2013 175 163
- US-A1- 2015 041 410
- US-A1- 2016 312 370
- US-A1- 2020 024 756
- US-A1- 2020 024 756

## Description

### CROSS-REFERENCE TO RELATED APPLICATIONS

This application claims priority to and the benefit of United States Patent Application Serial No. 63/033,527, filed June 2, 2020, entitled "Systems and Methods for Magnetic Buoyancy Enhanced Electrolysis and Boiling Systems,".

### BACKGROUND

Phase separation of liquids and gasses can be highly desirable in a variety of applications, including water electrolysis, heating and heat dissipation/heat transfer, and other applications. However, under certain circumstances, there can be various challenges with accomplishing phase separation. For instance, in low-gravity environments, a weak buoyancy force can allow gas bubbles to undesirably build up on certain surfaces.

Water electrolysis in low-gravity situations is one example application where a weak buoyancy force poses a challenge. Water electrolysis has been considered for space applications since the early 1960s. Currently, water electrolysis is regarded as a key element of environmental control and life support systems for space applications. A wide range of propulsion technologies, portable high-density power sources, and energy conversion and storage mechanisms make use of water electrolysis.

Major technical challenges arise when operating electrolytic cells in zero-gravity. For instance, due to the weak buoyancy force, a layer of gas bubbles develops over the electrodes, which shields the active surface and increases the ohmic resistance. In an effort to remedy this, forced water convection has been employed to flush the structure. Understandably and undesirably, forced water convection increases the complexity of the system and introduces additional limitations.

Low-gravity liquid/gas phase separation processes are also required for most types of electrolysis cells. Rotary and membrane-type devices are currently employed. Passive approaches that make use of surface tension by employing wedges, springs, or eccentric annuli have also been proposed or tested.

The alternative employment of electric fields for liquid management has been explored since the early 1960s. The drawbacks of these approaches are numerous: centrifuges add to system power loads and may represent a safety hazard, membranes have limited lifetime and tend to clog in the presence of water impurities, surface tension-based approaches require a careful geometrical design and are sensible to moderate departures from the operational design point, and electric fields consume power and may represent a safety hazard for both human and autonomous spaceflight due to the high potential differences.

### BRIEF SUMMARY

The invention is defined by the appended claims. Further embodiments of the invention are defined by the dependent claims.

Exemplary embodiments of the present disclosure relate to an electrolysis systems and methods. In one embodiment, an electrolysis cell (e.g., an electrolytic PEM cell, liquid electrolyte cell, etc.) includes a fluid inlet, a fluid outlet, an electrode, and one or more magnets disposed adjacent to the outlet and spaced apart from the electrode. The one or more magnets may be disposed around the fluid outlet and may include neodymium magnets. The one or more magnets are configured to cause gas bubbles that form on the electrode to detach from the electrode.

In another embodiment, a magnetic buoyancy enhanced electrolysis system includes a water pump, an electrolysis cell, a magnetic phase separator, and a plurality of conduits configured to facilitate fluid communication between the water pump, the electrolysis cell, and the magnetic phase separator.

The electrolysis cell may include a fluid reservoir, a fluid inlet in fluid communication with the reservoir, a fluid outlet in fluid communication with the reservoir, an electrode at least partially disposed within the reservoir, and one or more magnets spaced apart from the electrode. The one or more magnets may be disposed adjacent to and/or around the fluid outlet and may include neodymium magnets.

The magnetic phase separator may include a reservoir, a fluid inlet in fluid communication with the reservoir, a fluid outlet in fluid communication with the reservoir, and one or more magnets. The one or more magnets may be disposed outside the reservoir and/or inside the reservoir between the fluid inlet and the fluid outlet. The one or more magnets are configured to attract gas bubbles within a two-phase flow and cause the gas bubbles to collect on or around the one or more magnets.

According to another embodiment, an electrolysis method includes forming gas bubbles on an electrode of an electrolysis cell; detaching the gas bubbles from the electrode using a magnetic field created with one or more magnets associated with the electrolysis cell; creating a two-phase flow with the gas bubbles and water; communicating the two-phase flow to a phase separator; separating the two-phase flow into water and gas bubbles by collecting the gas bubbles on or around one or more magnets associated with the phase separator; and communicating the water back to the electrolysis cell.

In another example embodiment, an electrolysis cell includes a reservoir, a fluid inlet and a fluid outlet in fluid communication with the reservoir, an electrode disposed at least partially within the reservoir, and one or more magnets disposed adjacent to the electrode. The one or more magnets are configured to attract a liquid in the reservoir towards the electrode, thereby causing gas bubbles on the electrode to become detached from the electrode. In some embodiments, the electrolysis cell also includes a barrier disposed over the fluid outlet, the barrier being configured to allow gases to flow therethrough while preventing liquids from passing therethrough, such that the electrolysis cell functions as a phase separator.

These and other objects and features of the presently disclosed embodiments will become more fully apparent from the following description and appended claims, or may be learned by the practice thereof as set forth hereinafter.

### BRIEF DESCRIPTION OF THE DRAWINGS

To further clarify the above and other advantages and features of the presently disclosed embodiments, a more particular description thereof will be rendered by reference to specific embodiments thereof which are illustrated in the appended drawings. It is appreciated that these drawings depict only typical embodiments and are therefore not to be considered limiting, nor are the drawings necessarily drawn to scale. The disclosed embodiments will be described and explained with additional specificity and detail through the use of the accompanying drawings in which:
Figures 1A and 1B illustrate perspective views of a magnetic buoyancy enhanced electrolysis system according to an example embodiment of the present disclosure.
Figure 2 illustrates a cross-sectional view of an example magnetic electrolysis cell.
Figure 3 illustrates a cross-sectional view of another example magnetic electrolysis cell.
Figure 4 illustrates a cross-sectional view of an example magnetic phase separator.
Figures 5A and 5B illustrate cross-sectional views of another example of a magnetic phase separator combined with a surface-tension based implementation.

### DETAILED DESCRIPTION

The present disclosure is directed to methods and systems for diamagnetic, paramagnetic, and ferromagnetic manipulation of two-phase flows in electrolytic cells and boiling devices. The system makes use of a phenomenon known as magnetic buoyancy, that arises when an inhomogeneous magnetic field is applied on a mixture of substances with different magnetic susceptibilities. The system can be used in low-gravity environments to (i) induce the detachment of products from the electrodes or hot surfaces, (ii) improve the efficiency and productivity of the device, and/or (iii) separate products and reactants. The same benefits may be obtained in terrestrial environments if reactants with high magnetic susceptibility, such as ferrofluids, are employed. Passive, unpowered, lightweight, robust, and reliable electrolytic cells, boiling surfaces, and phase separators may be obtained with the principles disclosed herein.

Reference will now be made to the drawings to describe various aspects of exemplary embodiments. It is understood that the drawings are diagrammatic and schematic representations of such exemplary embodiments, and are not limiting, nor are they necessarily drawn to scale. No inference should therefore be drawn from the drawings as to the dimensions of any embodiment or element. In the following description, numerous specific details are set forth in order to provide a thorough understanding of the presently disclosed embodiments. It will be obvious, however, to one of ordinary skill in the art that the present embodiments may be practiced without these specific details. In other instances, well-known aspects of relevant devices and methods have not been described in particular detail in order to avoid unnecessarily obscuring the presently disclosed embodiments.

The inherent diamagnetic properties of water and associated electrolytes may be employed to induce the natural detachment of gas bubbles off of an electrode in an electrolysis cell and/or collection of the gas bubbles. As discussed herein, this technology may be used to create passive, lightweight, reliable, and unpowered magnetic phase separators. Further benefits may be obtained by applying a magnetic field on an electrolytic cell to induce a convective flow on the layer of bubbles, enlarging the effective electrode surface, minimizing the ohmic resistance, and reducing the cell voltage.

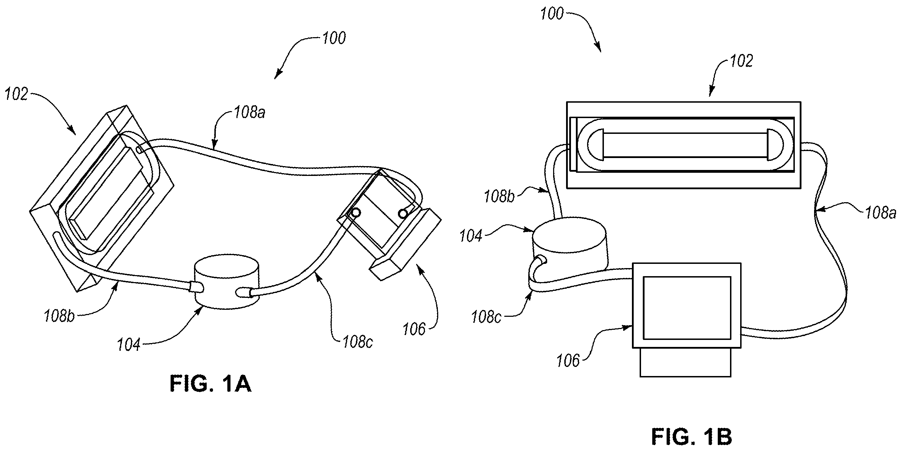

Figures 1A and 1B illustrate an example embodiment of a magnetic buoyancy enhanced electrolysis system 100 according to an example embodiment of the present disclosure. The system 100 includes a closed water circuit with a magnetic phase separator 102, a low-power water pump 104, and a magnetic electrolysis cell 106. The magnetic phase separator 102, the low-power water pump 104, and the magnetic electrolysis cell 106 are in fluid communication via conduits 108a, 108b, 108c. In particular, the magnetic electrolysis cell 106 is in fluid communication with the magnetic phase separator 102 via conduit 108a, the magnetic phase separator 102 is in fluid communication with the water pump 104 via conduit 108b, and the water pump 104 is in fluid communication with the magnetic electrolysis cell 106 via conduit 108c. The water pump 104 circulates fluids (water, gases, etc.) within the system 100.

The magnetic electrolysis cell 106 employs a cathode-feed configuration that produces a small volume of H₂. The H₂ is liberated to the circuit via conduit 108a. In addition to the H₂, water flows through the circuit, including through conduit 108a. The water and H₂ form a two-phase flow. The cathode side of the electrolysis cell 106 is left open, liberating a negligible amount of O₂ to a separate circuit. While the present embodiments are described as cathode-feed configurations that produce H₂, the present disclosure can be applied to anode-feed configurations that produce a mixed water/O₂ flow.

As will be discussed in further detail below, the magnetic electrolysis cell 106 may include an electrode and one or more magnetics that help detach H₂ bubbles from the electrode. As also discussed below, the H₂ bubbles may be collected within the magnetic electrolysis cell 106 or in a separate phase separator.

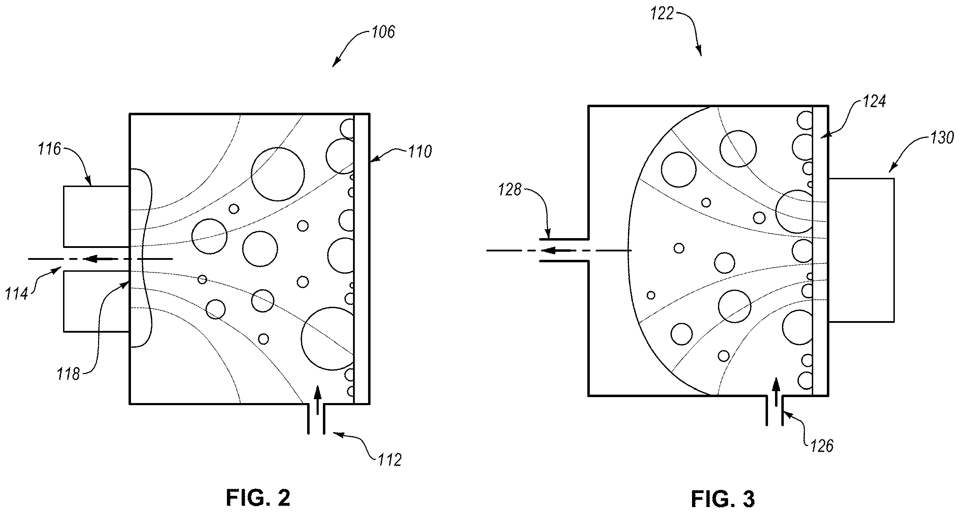

Figure 2 illustrates a cross-sectional view of the magnetic electrolysis cell 106. As can be seen, the magnetic electrolysis cell 106 includes an electrode (cathode) 110, an inlet 112 (in fluid communication with conduit 108c from Figures 1A and 1B), and an outlet 114 (in fluid communication with conduit 108a from Figures 1A and 1B). The electrode 110 may be disposed entirely or at least partially within a fluid reservoir of the magnetic electrolysis cell 106. As also shown in Figure 2, one or more neodymium magnets 116 are disposed by or around the outlet 114 and/or are spaced apart from the electrode 110. The magnet(s) 116 create a magnetic field within the electrolysis cell 106 that repels the water therein and/or attract the H₂ bubbles that form on the electrode 110, thereby dislodging the H₂ bubbles from the electrode 110.

As the water pump 104 circulates the water in the system 100, the H₂ bubbles that are dislodged from the electrode 110 can flow with the water that is circulated through the system 100, thereby creating a two-phase flow. In some embodiments, the two-phase flow (e.g., water and H₂ bubbles) flows out of the magnetic electrolysis cell 106 through the outlet 114, through conduit 108a, and into the phase separator 102 (which will be discussed in greater detail below).

In other embodiments, such as that shown in Figure 2, the electrolysis cell 106 includes a barrier 118 at the outlet 114. The barrier 118 may allow for the H₂ bubbles to flow out of the magnetic electrolysis cell 106 while preventing water from passing therethrough. The magnetic electrolysis cell 106 may therefore facilitate the detachment of the H₂ bubbles from the electrode 110 and also function or act as a phase separator by collecting the H₂ bubbles and allowing the H₂ bubbles to flow out without water.

Figure 3 illustrates a cross-sectional view of another embodiment of a magnetic electrolysis cell 122 that may be used in place of magnetic electrolysis cell 106. Similar to the electrolysis cell 106, the electrolysis cell 122 includes an electrode 124 (that may be disposed entirely or at least partially within a fluid reservoir of the magnetic electrolysis cell 122), an inlet 126 (in fluid communication with conduit 108c of Figures 1A and 1B), and an outlet 128 (in fluid communication with conduit 108a of Figures 1A and 1B). As also shown in Figure 3, one or more neodymium magnets 130 are disposed adjacent to the electrode 124 on an opposing side of the electrode opposite to the reservoir in which the para/ferromagnetic liquid is located. The magnet 130 creates a magnetic field within the electrolysis cell 122 that attracts the para/ferromagnetic liquid (such as a water-based ferrofluid) therein and/or repels the H₂ bubbles that form on the electrode 124. As a result, the magnetic field dislodges or causes the H₂ bubbles to become detached from the electrode 124. The H₂ bubbles may exit the electrolysis cell 122 through the outlet 128.

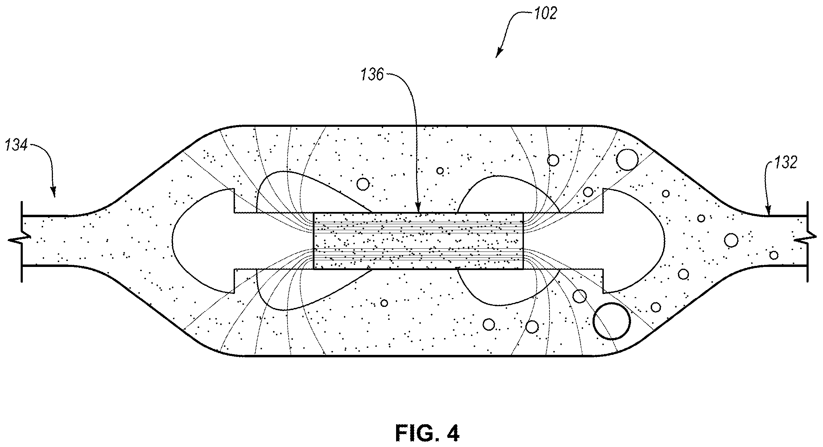

In the event that an electrolysis cell is used that does not collect the H₂ or otherwise separate the H₂ bubbles from the water, a separate phase separator can be used for such purpose. Figure 4 illustrates a cross-sectional view of the magnetic phase separator 102 from Figures 1A and 1B, which may perform such function. As can be seen in Figure 4, the magnetic phase separator 102 includes an inlet 132 and an outlet 134. The inlet 132 is in fluid communication with the conduit 108a (from Figures 1A and 1B). The two-phase flow generated in the electrolysis cell 106 can enter the phase separator 102 through the inlet 132. The outlet 134 is in fluid communication with the conduit 108b (from Figures 1A and 1B).

One or more magnets 136 may be disposed within the phase separator 102 or adjacent to an outer surface thereof (either inside or outside the phase separator 102). The one or more magnets 136 may create a magnetic field within the phase separator 102 and attract the H₂ bubbles and/or repel the water within the two-phase flow. The H₂ bubbles may accumulate on or around the one or more magnets 136, thereby leaving the water to flow out of the outlet 134 without the H₂ bubbles. The water can then flow through the conduit 108b, the water pump 104, the conduit 108c, and back into the electrolysis cell 106 (via inlet 112) to collect additional H₂ bubbles from the electrode 110.

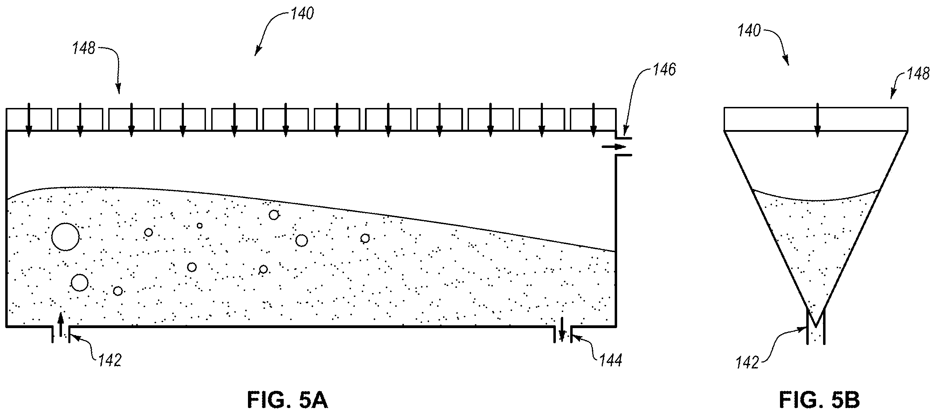

Figures 5A and 5B illustrate cross-sectional views of another magnetic phase separator 140 that could be used in the system of Figures 1A and 1B in addition to or instead of phase separator 102. As can be seen in Figures 5A and 5B, the magnetic phase separator 140 includes a fluid reservoir with an inlet 142, a fluid outlet 144, and a gas outlet 146. The inlet 142 is in fluid communication with the conduit 108a (from Figures 1A and 1B). The two-phase flow generated in the electrolysis cell 106 can enter the phase separator 140 through the inlet 142. The fluid outlet 144 is in fluid communication with the conduit 108b (from Figures 1A and 1B).

In the illustrated embodiment, the fluid reservoir has a trough shape, with the fluid inlet 142 and the fluid outlet 144 disposed adjacent a vertex thereof. One or more magnets 148 may be disposed on or within the top of the phase separator 140 (opposite to the vertex). The gas outlet 146 may be disposed adjacent to the one or more magnets 148.

The one or more magnets 148 may create a magnetic field within the phase separator 140 and attract the H₂ bubbles and/or repel the water within the two-phase flow. The H₂ bubbles may accumulate on or around the one or more magnets 148 near the top of the phase separator 140, thereby leaving the water to flow out of the fluid outlet 144 without the H₂ bubbles. The water can then flow through the conduit 108b, the water pump 104, the conduit 108c, and back into the electrolysis cell 106 (via inlet 112) to collect additional H₂ bubbles from the electrode 110. The H₂ may exit the phase separator 140 through the gas outlet 146.

The magnetic phase separator 140 takes the form of a surface-tension/magnetic phase separator. The bubbles in microgravity tend to be spherical. When the bubbles are stretched with the wedge geometry of the fluid reservoir, they tend to displace to the open end by exerting pressure in the walls. The magnets 148 help separate small bubbles which do not touch the walls, and exert an additional force on those that do touch the walls.

The systems as described herein may provide various functions and benefits over previous electrolysis. For instance, (neodymium) magnets may be used to passively detach gas (e.g., H₂ or O₂) bubbles from an electrode (cathode or anode) of an electrolysis cell (as a function of flow rate). Removing gas bubbles from the electrode may improve the current-voltage cell efficiency curve/thermodynamic efficiency of the magnetic electrolysis cell, particularly in microgravity, without requiring additional systems/components that may increase the complexity of the overall system and introduce other disadvantages. The magnetic electrolytic cells described herein may also reduce the diameter of the bubbles that detach from the electrode. Additionally, (neodymium) magnets may induce liquid/gas phase separation in low-gravity. In some embodiments, the magnets are the same magnets that facilitate passive detachment of the gas from the electrode. In other embodiments, the magnets are part of a separate phase separator.

In light of the disclosure herein, it will be appreciated that one embodiment of an electrolysis cell may include a fluid inlet, a fluid outlet, an electrode, and one or more magnets configured to passively detach gas bubbles from the electrode.

In some embodiments, the one or more magnets may be disposed adjacent to or around the fluid outlet and spaced apart from the electrode. In some embodiments, the one or more magnets may be disposed on a first side of the electrode opposite a fluid reservoir in the electrolysis cell. In some embodiments, the one or more magnets comprise neodymium magnets. In some embodiments, the one or more magnets are configured to cause gas bubbles that form on the electrode to detach from the electrode.

In some embodiments, the electrolysis cell also includes a fluid reservoir disposed between the fluid inlet and the fluid outlet.

In some embodiments, the electrolysis cell also includes a barrier disposed over the outlet. The barrier may be being configured to allow gases to flow therethrough while preventing liquids from passing therethrough, such that the electrolysis cell functions as a phase separator.

According to one embodiment, a magnetic buoyancy enhanced electrolysis system includes a water pump, an electrolysis cell, a magnetic phase separator, and a plurality of conduits configured to facilitate fluid communication between the water pump, the electrolysis cell, and the magnetic phase separator.

In some embodiments, the electrolysis cell includes a fluid reservoir, a fluid inlet in fluid communication with the fluid reservoir, a fluid outlet in fluid communication with the fluid reservoir, an electrode at least partially disposed within the fluid reservoir, and one or more magnets configured to passively detach gas bubbles from the electrode.

In some embodiments, the one or more magnets are disposed adjacent to the fluid outlet. In some embodiments, the one or more magnets are disposed around the fluid outlet. In some embodiments, the one or more magnets comprise neodymium magnets. In some embodiments, the one or more magnets are disposed on a first side of the electrode and the fluid reservoir is disposed on an opposing side of the electrode.

In some embodiments, the magnetic phase separator includes a fluid reservoir, a fluid inlet in fluid communication with the fluid reservoir, a fluid outlet in fluid communication with the fluid reservoir, and one or more magnets. In some embodiments, the one or more magnets of the magnetic phase separator are disposed inside the fluid reservoir of the magnetic phase separator between the fluid inlet and the fluid outlet of the magnetic phase separator. In some embodiments, the one or more magnets of the magnetic phase separator are disposed outside the fluid reservoir of the magnetic phase separator. In some embodiments, the one or more magnets of the magnetic phase separator are configured to attract gas bubbles within a two-phase flow and cause the gas bubbles to collect on or around the one or more magnets of the magnetic phase separator. In some embodiments, the magnetic phase separator further comprises a gas outlet.

In some embodiments, the fluid reservoir has a trough shape, with the fluid inlet and the fluid outlet disposed adjacent a vertex thereof, the one or more magnets being disposed opposite to the vertex, and the gas outlet being disposed adjacent to the one or more magnets.

In another embodiment, an electrolysis method includes forming gas bubbles on an electrode of an electrolysis cell, detaching the gas bubbles from the electrode using a magnetic field created with one or more magnets associated with the electrolysis cell, creating a two-phase flow with the gas bubbles and water, communicating the two-phase flow to a phase separator, separating the two-phase flow into water and gas bubbles by collecting the gas bubbles on or around one or more magnets associated with the phase separator, and communicating the water back to the electrolysis cell.

In another embodiment, an electrolysis method includes forming gas bubbles on an electrode of an electrolysis cell, detaching the gas bubbles from the electrode using a magnetic field created with one or more magnets associated with the electrolysis cell, creating a two-phase flow with the gas bubbles and water, and separating the two-phase flow into water and gas bubbles by collecting the gas bubbles on or around one or more magnets associated with the electrolysis cell.

In still another embodiment, an electrolysis cell includes a fluid reservoir, a fluid inlet in fluid communication with the fluid reservoir, a fluid outlet in fluid communication with the fluid reservoir, an electrode disposed at least partially within the fluid reservoir, and one or more magnets disposed adjacent to the electrode. The one or more magnets may be configured to attract a liquid in the fluid reservoir towards the electrode, thereby causing gas bubbles on the electrode to become detached from the electrode. In some embodiments, the one or more magnets are disposed on a first side of the electrode opposite the fluid reservoir in the electrolysis cell.

In some embodiments, the one or more magnets comprise neodymium magnets. In some embodiments, the electrolysis cell also includes barrier disposed over the fluid outlet, the barrier being configured to allow gases to flow therethrough while preventing liquids from passing therethrough, such that the electrolysis cell functions as a phase separator.

Unless otherwise indicated, numbers expressing quantities, constituents, distances, or other measurements used in the specification and claims are to be understood as optionally being modified by the term "about" or its synonyms. When the terms "about," "approximately," "substantially," or the like are used in conjunction with a stated amount, value, or condition, it may be taken to mean an amount, value or condition that deviates by less than 20%, less than 10%, less than 5%, less than 1%, less than 0.1%, or less than 0.01% of the stated amount, value, or condition.

## Claims

1. An electrolysis cell (106) comprising:
a fluid inlet (112);
a fluid outlet (114);
an electrode (110); **characterised in that**
the electrolysis cell further comprising
one or more magnets (116) configured to passively detach gas bubbles from the electrode wherein the one or more magnets are disposed adjacent to or around the fluid outlet and spaced apart from the electrode.

2. An electrolysis cell as recited in claim 1, wherein the one or more magnets are disposed on a first side of the electrode opposite a fluid reservoir in the electrolysis cell.

3. An electrolysis cell as recited in any of claims 1-2, wherein the one or more magnets are configured to cause gas bubbles that form on the electrode to detach from the electrode.

4. An electrolysis cell as recited in any of claims 1-3, further comprising a fluid reservoir disposed between the fluid inlet and the fluid outlet.

5. An electrolysis cell as recited in any of claims 1-4, further comprising a barrier disposed over the outlet, the barrier being configured to allow gases to flow therethrough while preventing liquids from passing therethrough, such that the electrolysis cell functions as a phase separator.

6. A magnetic buoyancy enhanced electrolysis system comprising:
a water pump;
an electrolysis cell as recited in claim 1, wherein the electrolysis cell further comprises a fluid reservoir and the electrode is disposed at least partially within the fluid reservoir;
a magnetic phase separator; and
a plurality of conduits configured to facilitate fluid communication between the water pump, the electrolysis cell, and the magnetic phase separator.

7. A magnetic buoyancy enhanced electrolysis system as recited in claim 6, wherein the one or more magnets are disposed on a first side of the electrode and the fluid reservoir is disposed on an opposing side of the electrode.

8. A magnetic buoyancy enhanced electrolysis system as recited in any of claims 6 or 7, wherein the magnetic phase separator comprises:
a fluid reservoir;
a fluid inlet in fluid communication with the fluid reservoir;
a fluid outlet in fluid communication with the fluid reservoir; and
one or more magnets.

9. A magnetic buoyancy enhanced electrolysis system as recited in claim 8, wherein the one or more magnets of the magnetic phase separator are disposed:
inside the fluid reservoir of the magnetic phase separator between the fluid inlet and the fluid outlet of the magnetic phase separator; or
outside the fluid reservoir of the magnetic phase separator.

10. A magnetic buoyancy enhanced electrolysis system as recited in any of claims 8-9, wherein the one or more magnets of the magnetic phase separator are configured to attract gas bubbles within a two-phase flow and cause the gas bubbles to collect on or around the one or more magnets of the magnetic phase separator.

11. A magnetic buoyancy enhanced electrolysis system as recited in any of claims 8-10, wherein the magnetic phase separator further comprising a gas outlet.

12. A magnetic buoyancy enhanced electrolysis system as recited in claim 11, wherein the fluid reservoir has a trough shape, with the fluid inlet and the fluid outlet disposed adjacent a vertex thereof, the one or more magnets being disposed opposite to the vertex, and the gas outlet being disposed adjacent to the one or more magnets.

13. An electrolysis method comprising:
forming gas bubbles on an electrode of an electrolysis cell;
detaching the gas bubbles from the electrode using a magnetic field created with one or more magnets associated with the electrolysis cell, wherein the one or more magnets are disposed adjacent to or around a fluid outlet of the electrolysis cell and spaced apart from the electrode;
creating a two-phase flow with the gas bubbles and water;
communicating the two-phase flow to a phase separator;
separating the two-phase flow into water and gas bubbles by collecting the gas bubbles on or around one or more magnets associated with the phase separator; and
communicating the water back to the electrolysis cell.

14. An electrolysis cell as recited in claim 1, further comprising a fluid reservoir, wherein:
the fluid inlet is in fluid communication with the fluid reservoir;
the fluid outlet is in fluid communication with the fluid reservoir;
the electrode is disposed at least partially within the fluid reservoir; and
the one or more magnets are disposed adjacent to the electrode, the one or more magnets being configured to attract a liquid in the fluid reservoir towards the electrode, thereby causing gas bubbles on the electrode to become detached from the electrode, wherein the one or more magnets are disposed on a first side of the electrode opposite the fluid reservoir in the electrolysis cell.

15. An electrolysis cell as recited in claim 14, further comprising a barrier disposed over the fluid outlet, the barrier being configured to allow gases to flow therethrough while preventing liquids from passing therethrough, such that the electrolysis cell functions as a phase separator.

## Patentansprüche

1. Elektrolysezelle (106), enthaltend
einen Fluideinlass (112);
einen Fluidauslass (114);
eine Elektrode (110);
**dadurch gekennzeichnet, dass** die Elektrolysezelle weiter enthält
einen oder mehrere Magnete (116), die dazu konfiguriert sind, passiv Gasblasen von der Elektrode zu lösen, wobei der eine oder die mehreren Magnete angrenzend an oder um den Fluidauslass und beabstandet von der Elektrode angeordnet sind.

2. Elektrolysezelle nach Anspruch 1, wobei der eine oder die mehreren Magnete auf einer ersten Seite der Elektrode gegenüber einem Fluidbehälter der Elektrolysezelle angeordnet sind.

3. Elektrolysezelle nach einem der Ansprüche 1-2, wobei der eine oder die mehreren Magnete konfiguriert sind zu bewirken, dass Gasblasen, die sich auf der Elektrode bilden, sich von der Elektrode lösen.

4. Elektrolysezelle nach einem der Ansprüche 1-3, weiter enthaltend einen Fluidbehälter, der zwischen dem Fluideinlass und dem Fluidauslass angeordnet ist.

5. Elektrolysezelle nach einem der Ansprüche 1-4, weiter enthaltend eine Schranke, die über den Auslass angeordnet ist, wobei die Schranke konfiguriert ist, dass Gase durch sie strömen können, während sie Flüssigkeiten daran hindert, durch sie zu strömen, so dass die Elektrolysezelle als ein Phasentrenner wirkt.

6. Ein durch magnetischen Auftrieb verstärktes Elektrolysesystem, enthaltend:
eine Wasserpumpe;
eine Elektrolysezelle nach Anspruch 1, wobei die Elektrolysezelle weiter einen Fluidbehälter enthält und die Elektrode zumindest teileweise in dem Fluidbehälter angeordnet ist;
einen magnetischen Phasentrenner; und
eine Mehrzahl von Leitungen, die konfiguriert sind, eine Fluidverbindung zwischen der Wasserpumpe, der Elektrolysezelle und dem magnetischen Phasentrenner zu vereinfachen.

7. Duch magnetischen Auftrieb verstärktes Elektrolysesystem nach Anspruch 6, wobei der eine oder die mehreren Magnete auf einer ersten Seite der Elektrode angeordnet sind und der Fluidbehälter auf einer gegenüberliegenden Seite der Elektrode angeordnet ist.

8. Duch magnetischen Auftrieb verstärktes Elektrolysesystem nach einem der Ansprüche 6 oder 7, wobei der magnetische Phasentrenner enthält:
einen Fluidbehälter;
einen Fluideinlass in Fluidverbindung mit dem Fluidbehälter;
einen Fluidauslass in Fluidverbindung mit dem Fluidbehälter; und
einen oder mehrere Magnete.

9. Duch magnetischen Auftrieb verstärktes Elektrolysesystem nach Anspruch 8, wobei der eine oder die mehreren Magnete des magnetischen Phasentrenners im Inneren des Fluidbehälters des magnetischen Phasentrenners zwischen dem Fluideinlass und dem Fluidauslass des magnetischen Phasentrenners angeordnet sind; oder
Außerhalb des Fluidbehälters des magnetischen Phasentrenners angeordnet sind.

10. Duch magnetischen Auftrieb verstärktes Elektrolysesystem nach einem der Ansprüche 8-9, wobei der eine oder die mehreren Magnete des magnetischen Phasentrenners konfiguriert sind, Gasblasen aus einer Zweiphasenströmung anzuziehen und zu bewirken, dass die Gasblasen sich an dem einen oder den mehreren Magneten oder um den einen oder die mehreren Magnete des magnetischen Phasentrenners herum sammeln.

11. Duch magnetischen Auftrieb verstärktes Elektrolysesystem nach einem der Ansprüche 8-10, wobei der magnetische Phasentrenner weiter einen Gasauslass enthält.

12. Duch magnetischen Auftrieb verstärktes Elektrolysesystem Anspruch 11, wobei der Flulidbehälter eine Trogform hat, wobei der Fluideinlass und der Fluidauslass an einer Spitze davon angeordnet sind, der eine oder die mehreren Magnete gegenüber der Spitze angeordnet sind, und der Gasauslass angrenzend an den einen oder die mehreren Magnete angeordnet ist.

13. Elektrolyseverfahren, enthaltend:
Bilden von Gasblasen auf einer Elektrode einer Elektrolysezelle;
Lösen der Gasblasen von der Elektrode unter Verwendung eines Magnetfelds, das mit einem oder mehreren Magneten erzeugt wird, die zu der Elektrolysezelle gehören, wobei der eine oder die mehreren Magnete angrenzend zu einem Fluidauslass der Elektrolysezelle oder um einen Fluidauslass der Elektrolysezelle herum angeordnet sind und von der Elektrode beabstandet sind;
Erzeugen einer Zweiphasenströmung mit den Gasblasen und Wasser;
Transportieren der Zweiphasenströmung an einen Phasentrenner;
Trennen der Zweiphasenströmung in Wasser und Gasblasen durch Sammeln der Gasblasen auf dem einen oder den mehreren Magneten oder um den einen oder die mehreren Magneten herum, die zu dem Phasentrenner gehören; und
Transportieren des Wassers zurück zur Elektrolysezelle.

14. Elektrolysezelle nach Anspruch 1, weiter enthaltend einen Fluidbehälter, wobei:
der Fluideinlass in Fluidverbindung mit dem Fluidbehälter ist;
der Fluidauslass in Fluidverbindung mit dem Fluidbehälter ist;
die Elektrode zumindest teilweise innerhalb des Fluidbehälters angeordnet ist; und
der eine oder die mehreren Magnete angrenzend an die Elektrode angeordnet sind, wobei der eine oder die mehreren Magnete konfiguriert sind, eine Flüssigkeit in dem Fluidbehälter in Richtung der Elektrode zu ziehen, wodurch bewirkt wird, dass Gasblasen auf der Elektrode von der Elektrode gelöst werden, wobei der eine oder die mehreren Magnete auf einer ersten Seite der Elektrode gegenüber dem Fluidbehälter in der Elektrolysezelle angeordnet sind.

15. Elektrolysezelle nach Anspruch 14, weiter enthaltend eine Schranke, die über dem Fluidauslass angeordnet ist, wobei die Schranke konfiguriert ist, dass sie Gase durch sie strömen lässt, während sie Flüssigkeiten daran hindert, durch sie durch zu strömen, so dass die Elektrolysezelle als ein Phasentrenner wirkt.

## Revendications

1. Cellule d'électrolyse (106) comprenant :
une entrée de fluide (112) ;
une sortie de fluide (114) ;
une électrode (110) ;
**caractérisée en ce que** la cellule d'électrolyse comprend en outre :
un ou plusieurs aimants (116) configurés pour détacher de manière passive des bulles de gaz de l'électrode, selon lequel le ou les plusieurs aimants sont disposés de manière adjacente à, ou autour de la sortie de fluide et espacés de l'électrode.

2. Cellule d'électrolyse selon la revendication 1, selon laquelle le ou les plusieurs aimants sont disposés sur un premier côté de l'électrode à l'opposé d'un réservoir à fluide dans la cellule d'électrolyse.

3. Cellule d'électrolyse selon l'une quelconque des revendications 1 à 2, selon laquelle le ou les plusieurs aimants sont configurés de manière à faire se détacher de l'électrode des bulles de gaz se formant au niveau de l'électrode.

4. Cellule d'électrolyse selon l'une quelconque des revendications 1 à 3, comprenant en outre un réservoir à fluide disposé entre l'entrée de fluide et la sortie de fluide.

5. Cellule d'électrolyse selon l'une quelconque des revendications 1 à 4, comprenant en outre une barrière disposée sur la sortie, la barrière étant configurée pour permettre aux gaz de s'écouler à travers tout en empêchant des liquides d'y traverser, de sorte que la cellule d'électrolyse fonctionne en tant que séparateur de phase.

6. Système d'électrolyse à flottaison magnétique comprenant :
une pompe à eau ;
une cellule d'électrolyse selon la revendication 1, selon laquelle la cellule d'électrolyse comprend en outre un réservoir à fluide et l'électrode est disposée au moins pour partie dans le réservoir à fluide ;
un séparateur de phase magnétique ; et
une pluralité de conduits configurée de manière à faciliter la communication en fluide entre la pompe à eau, la cellule d'électrolyse, et le séparateur de phase magnétique.

7. Système d'électrolyse à flottaison magnétique selon la revendication 6, selon lequel le ou les plusieurs aimants sont disposés sur un premier côté de l'électrode et le réservoir à fluide est disposé sur un côté opposé de l'électrode.

8. Système d'électrolyse à flottaison magnétique selon l'une quelconque des revendications 6 ou 7, selon lequel le séparateur de phase magnétique comprend :
un réservoir à fluide ;
une entrée de fluide en communication de fluide avec le réservoir à fluide ;
une sorte de fluide en communication de fluide avec le réservoir à fluide ; et
un ou plusieurs aimants.

9. Système d'électrolyse à flottaison magnétique selon la revendication 8, selon lequel le ou les plusieurs aimants du séparateur de phase magnétique sont disposés :
à l'intérieur du réservoir à fluide du séparateur de phase magnétique entre l'entrée de fluide et la sortie de fluide du séparateur de phase magnétique ; ou
à l'extérieur du réservoir à fluide du séparateur de phase magnétique.

10. Système d'électrolyse à flottaison magnétique selon l'une quelconque des revendications 8 à 9, selon lequel le ou les plusieurs aimants du séparateur de phase magnétique sont configurés de manière à s'attirer des bulles de gaz dans un flux biphasique et faire se détacher les bulles de gaz afin de les récupérer sur ou autour du ou des plusieurs aimants du séparateur de phase magnétique.

11. Système d'électrolyse à flottaison magnétique selon l'une quelconque des revendications 8 à 10, selon lequel le séparateur de phase magnétique comprend en outre une sortie de gaz.

12. Système d'électrolyse à flottaison magnétique selon la revendication 11, selon lequel le réservoir à fluide présente une forme en auge, l'entrée de fluide et la sortie de fluide étant disposées de manière adjacente à un vertex de celui-ci, le ou les plusieurs aimants étant disposés à l'opposé du vertex, et la sortie de gaz étant disposée de manière adjacente à l'aimant ou aux plusieurs aimants.

13. Procédé d'électrolyse comprenant :
la génération de bulles au niveau d'une électrode d'une cellule d'électrolyse ;
le détachement des bulles de gaz de l'électrode via l'application d'un champ magnétique généré par un ou plusieurs aimants associés à la cellule d'électrolyse, selon lequel le ou les plusieurs aimants sont disposés de manière adjacente à, ou autour d'une sortie de fluide de la cellule d'électrolyse et espacés de l'électrode ;
la génération d'un flux biphasique de bulles de gaz et d'eau ;
la communication du flux biphasique à un séparateur de phase ;
la séparation du flux biphasique en eau et en bulles de gaz en récupérant les bulles de gaz au niveau de, ou autour de l'aimant ou des plusieurs aimants associés au séparateur de phase ; et
la communication de l'eau en renvoi dans la cellule d'électrolyse.

14. Cellule d'électrolyse selon la revendication 1, comprenant en outre un réservoir à fluide, selon laquelle :
l'entrée de fluide est en communication de fluide avec le réservoir à fluide ;
la sortie de fluide est en communication de fluide avec le réservoir à fluide ;
l'électrode est disposée au moins pour partie dans le réservoir à fluide ; et
le ou les plusieurs aimants sont disposés de manière adjacente à l'électrode, le ou les plusieurs aimants étant configurés pour s'attirer un liquide dans le réservoir à fluide vers l'électrode, provoquant ainsi le détachement de l'électrode de bulles de gaz se trouvant au niveau de l'électrode, selon laquelle le ou les plusieurs aimants sont disposés sur un premier côté de l'électrode à l'opposé du réservoir à fluide dans la cellule d'électrolyse.

15. Cellule d'électrolyse selon la revendication 14, comprenant en outre une barrière disposée sur la sortie de fluide, la barrière étant configurée de manière à permettre des gaz de s'écouler à travers la barrière, tout en empêchant des liquides d'y passer, de sorte que la cellule d'électrolyse fonctionne en tant que séparateur de phase.
